# EUROPEAN PATENT SPECIFICATION

(11) **EP 1 226 724 B1**
(45) Date of publication and mention of the grant of the patent: **24.11.2004**
(21) Application number: 00976609.8
(22) Date of filing: 20.10.2000
(51) Int. Cl.: H04Q 7/20, H04Q 7/28, H01Q 3/22, H04Q 7/36, H04Q 7/38

(54) **METHOD AND APPARATUS FOR PROVIDING FORWARD LINK SOFTER HANDOFF IN A CODE DIVISION MULTIPLE ACCESS COMMUNICATION SYSTEM**
VERFAHREN UND VORRICHTUNG ZUR BEREISTELLUNG VON SANFTEREM WEITERREICHEN FÜR DIE VORWÄRTSVERBINDUNG IN EINEM CDMA-KOMMUNIKATIONSSYSTEM
PROCEDE ET APPAREIL PERMETTANT D'ASSURER UN TRANSFERT DE LIAISON AVAL PLUS DOUX DANS UN SYSTEME DE COMMUNICATION A ACCES MULTIPLE A REPARTITION PAR CODE

(30) Priority: 22.10.1999 US 425087
(43) Date of publication of application: 31.07.2002
(73) Proprietor: MOTOROLA, INC., Schaumburg, IL 60196 (US)
(72) Inventor: SCHORMAN, Eric, Reed, Bedford, TX 76021 (US)
(74) Representative: Gibson, Sarah Jane
(86) International application number: PCT/US2000/029075
(87) International publication number: WO 2001/031944

(56) References cited:
- EP-A- 0 895 436
- WO-A-95/34102
- US-A- 6 094 165
- US-A- 6 167 036
- LINDMARK, B. LUNDGREN, S. BECKMAN, C. : "Dual polarized aperture coupled patch multibeam antenna - 0-7803-4478-2 " ANTENNAS AND PROPAGATION SOCIETY INTERNATIONAL SYMPOSIUM, 1998. IEEE - 0-7803-4478-2 , vol. 1, 21 - 26 June 1998, pages 328-331, XP002216261 Atlanta, GA, USA
- KLEIN A ET AL: "Known and novel diversity approaches in a JD-CDMA system concept developed within COST 231" PERSONAL, INDOOR AND MOBILE RADIO COMMUNICATIONS, 1995. PIMRC'95. WIRELESS: MERGING ONTO THE INFORMATION SUPERHIGHWAY., SIXTH IEEE INTERNATIONAL SYMPOSIUM ON TORONTO, ONT., CANADA 27-29 SEPT. 1995, NEW YORK, NY, USA,IEEE, US, 27 September 1995 (1995-09-27), pages 512-516, XP010150939 ISBN: 0-7803-3002-1
- ITU-R: "Key characteristics for the IMT-2000 Radio interfaces version 1" ITU RADICOMMUNICATION STUDY GROUPS, 12 February 1999 (1999-02-12), pages 20-56, XP002216262

## Description

### Field of the Invention

The present invention relates generally to communication systems, and more particularly, to a method and apparatus for providing forward link softer handoff in a code division multiple access (CDMA) communication system with antenna arrays, including narrow beam antennas.

### Background of the Invention

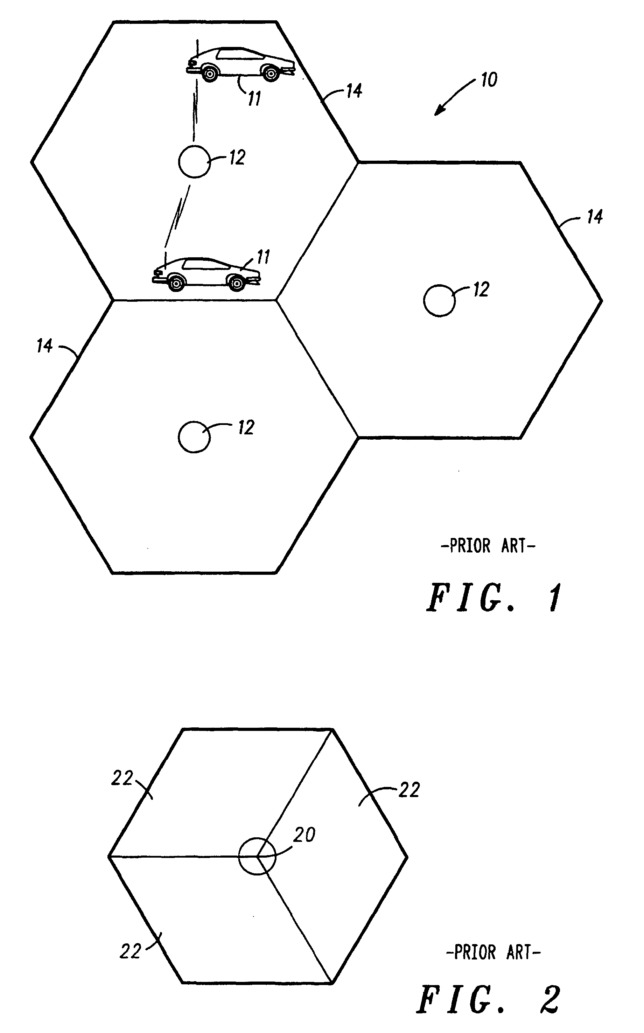

A cellular communication system typically includes one or more mobile stations or units, one or more base stations, and a mobile telephone switching office. Although only three cells **14** and two mobile stations **11** are shown in **FIG. 1**, a typical cellular network may comprise hundreds of base stations, thousands of mobile stations, and more than one mobile telephone switching office. Each cell will have allocated to it one or more dedicated control channels and one or more voice channels. In rural areas, the antenna towers **12** are commonly located at the center of a cell **14**, thereby providing omni-directional coverage. In an omni-directional cell, the control channels and the active voice channels are broadcast in all areas of the cell, usually from a single antenna. Where base stations are more densely located, a sectorized antenna system may be employed as in the prior art, and shown by the schematic diagram of **FIG. 2**. Sectorization requires directional antennas **20** having, for example, a 120 degree radiation pattern as illustrated in **FIG. 2**. Each sector **22** is itself a cell having its own control channels and traffic channels. Note that "channel" may refer to a specific carrier frequency in an analog system, to a specific carrier/slot combination in a hybrid TDMA/FDMA system such as IS-54 and GSM, or to a specific PN code in a CDMA system such as IS-95.

Existing narrow beam antenna arrays, which may comprise uniform linear arrays including dipoles or patch elements and passive beam forming networks including Butler matrices, typically produce several beams covering a sector. For example, a four beam pattern which includes four 30 degree beams covering a 120 degree sector or region is not uncommon. These beams typically have beam crossovers at approximately minus 4 dB, whereas sector antennas typically have beam crossovers at approximately minus 8 dB. Thus, beam-to-beam overlap within a narrow beam antenna pattern is significantly greater than sector-to-sector overlap within a sectorized antenna pattern, or even the overlap of beams at the edge of two narrow beam antennas.

In a CDMA system with narrow beam antennas, the forward link of adjacent beams produces interference in the beam overlap region. The beam overlap region of available narrow beam antenna panels is greater than the beam overlap region of available discrete antennas, because there is less control over the beams when using passive RF beam forming networks such as Butler Matrices. As stated above, a typical beam-to-beam crossover in a narrow beam antenna pattern is approximately minus 4 dB, while sector antennas can be made narrower than the sectors they occupy, and crossover at approximately minus 8 dB. With more overlap, there is more degradation. In addition, if narrow beam antennas are used for separate CDMA PN codes (i.e., one beam used for a current sector or PN), the additional overlap means more degradation on the forward link unless softer handoff is used.

One solution to the problem of increased degradation is to put the mobile station into softer handoff by making an assignment and transmitting the talk channel on both beams. Softer handoff then adds some path diversity, improving the mobile reception, and allowing a reduced transmit power allocation. With sector antennas, the larger spatial separation decorrelates the two paths and the diversity gain compensates for the overlap degradation. However, if the two beams originate in a single narrow beam antenna panel instead of the spatially separated sector antennas of a conventional system, the beams will have a higher correlation, producing less path diversity benefit, and resulting in a higher required transmit power allocation.

EP-A-0 895 436 discloses a beam forming apparatus and method for forming a plurality of directional beams within a sector as well as a full sector coverage beam. Uplink reception diversity is maintained through provision of either a single facet antenna or a pair of single facet antennas.

Therefore, a need exists for an improved method and apparatus for providing forward link softer handoff in a CDMA communication system with antenna arrays.

### Summary of the Invention

In a first aspect, the present invention provides an apparatus for providing polarization diversity in a code division multiple access cellular communication system, as claimed in claim 1.

In a further aspect, the present invention provides a method for providing polarization diversity in a code division multiple access cellular communication system, as claimed in claim 8.

### Brief Description of the Drawings

The novel features believed characteristic of the invention are set forth in the appended claims. The invention itself, however, as well as a preferred mode of use, further objects, and advantages thereof, will best be understood by reference to the following detailed description of an illustrative embodiment when read in conjunction with the accompanying drawings, wherein:
**FIG. 1** is a schematic plan view illustrating an omni-directional cellular pattern as in the prior art;
**FIG. 2** is a schematic plan view illustrating a sectorized cellular pattern as in the prior art;
**FIG. 3** is a schematic view illustrating a talk channel in softer handoff with two adjacent beams of a narrow beam antenna as in the prior art;
**FIGS. 4A-4C** are schematic views illustrating the utilization of dual-polarized narrow beam antennas with rerouting of the softer handoff talk channel into a cross polarization of another radiation pattern in accordance with the present invention;
**FIGS. 5A-5B** are schematic views illustrating the utilization of discrete directive antennas or an array of antenna elements forming a phased array as an alternative to narrow beam antennas; and
**FIG. 6** illustrates a logical flowchart of the method of providing forward link softer handoff in a CDMA communication system with dual-polarized antennas according to the method and system of the present invention.

### Detailed Description of the Invention

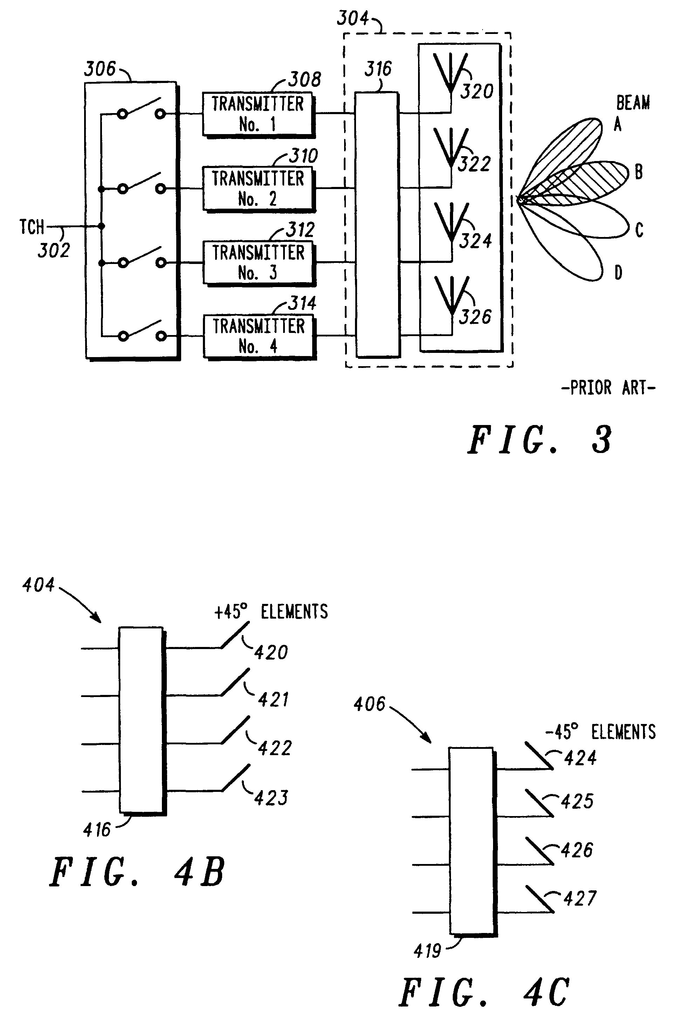

With reference now to the figures, and in particular with reference to **FIG. 3**, there is depicted a talk channel **302** in softer handoff with two adjacent beams; beams A and B of narrow beam antenna **304** as in the prior art. Narrow beam antenna **304** comprises Butler matrix **316** and a uniform linear array of antenna elements **320-326**. As seen in **FIG. 3**, talk channel **302** is connected to switch **306**, which is connected to transmitters **308-314**, respectively. As will be understood by those skilled in the art, an antenna pattern is formed by routing a signal from one of the transmitters **308-314** to Butler matrix **316**, where it is thereafter distributed to antenna elements **320-326**. For example, signals transmitted by transmitters **308** and **310** are phased and distributed by Butler matrix **316** and antenna elements **320-326** such that the patterns produced will be beams A and B, respectively. Each of the other beams (C and D) are formed in a similar fashion. When a mobile station in the beam overlap region between two adjacent beams, for example beams A and B, requires softer handoff to a second beam, the talk channel **302** is routed via switch **306** to transmitters **308** and **310**, which are coupled to the narrow beam antenna **304**, producing beam patterns A and B, thereby placing the mobile station within two adjacent beams of the narrow beam antenna **304**. However, since beams A and B originate in a single narrow beam antenna panel, the beams have a higher correlation, thereby producing less path diversity benefit and resulting in a higher required transmit power allocation.

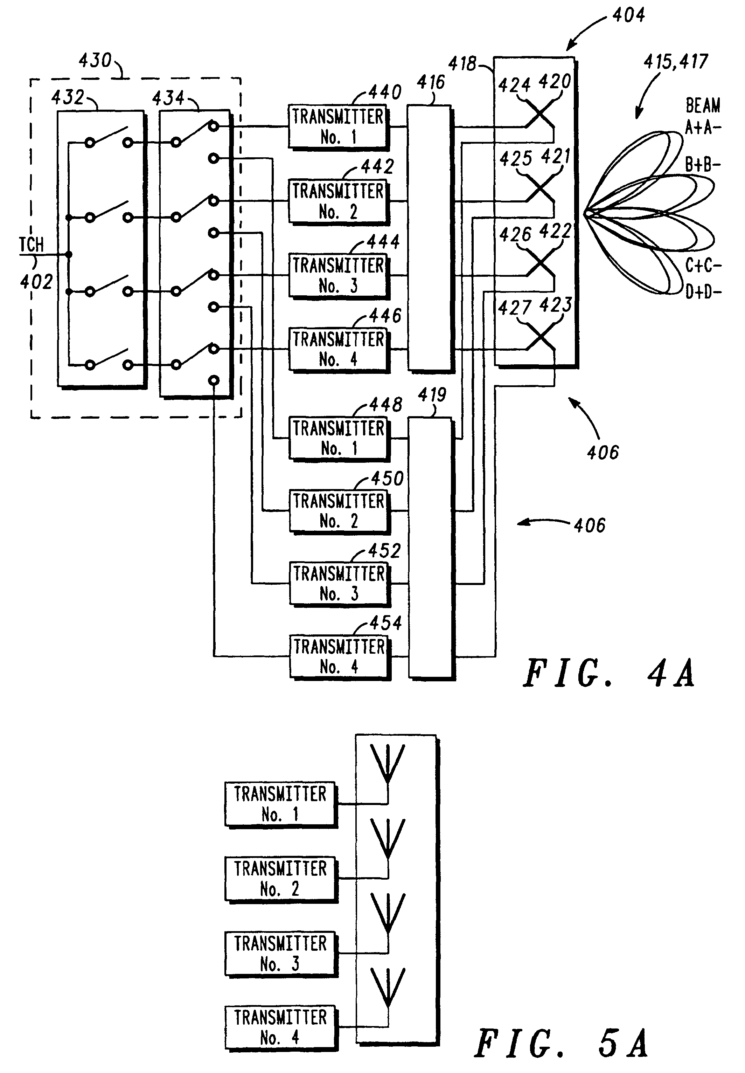

In accordance with a preferred embodiment of the present invention, **FIGS. 4A-4C** illustrate the utilization of dual polarized antenna arrays **404** and **406** including rerouting the softer handoff talk channel **402** from a radiation pattern **415** of the first antenna array **404** into a radiation pattern **417** of the second antenna array **406**. It should be noted that **FIGS. 4B** and **4C** are included to give a clearer illustration of antenna arrays **404** and **406,** respectively, and **FIG. 4A** illustrates, among other things, the antenna elements **420-427** that form dual polarized uniform linear array **418.** As seen in **FIGS. 4A-4C,** talk channel **402** is coupled to softer handoff router **430,** which is coupled to first antenna array transmitters **440-446** and to second antenna array transmitters **448-454,** respectively. Router **430** includes first switching device **432** and second switching device **434.** When a mobile station in the beam overlap region between two beams of the same polarization, for example adjacent beams A+ and B+, requires softer handoff to a second beam, the talk channel **402** is rerouted via router **430** to transmitter **440** of first antenna array and to transmitter **450** of second antenna array, which are coupled to antenna elements **420-423** with appropriate phasing from beam former **416,** and to antenna elements **424-427** with appropriate phasing from beam former **419,** respectively, thereby effectively rerouting the softer handoff talk channel **402** from radiation pattern B+ of the first antenna array **404** into radiation pattern B- of the second antenna array **406.** By rerouting the talk channel to the cross polarization rather than the same polarization, the two diversity paths are less correlated, thereby improving the diversity gain.

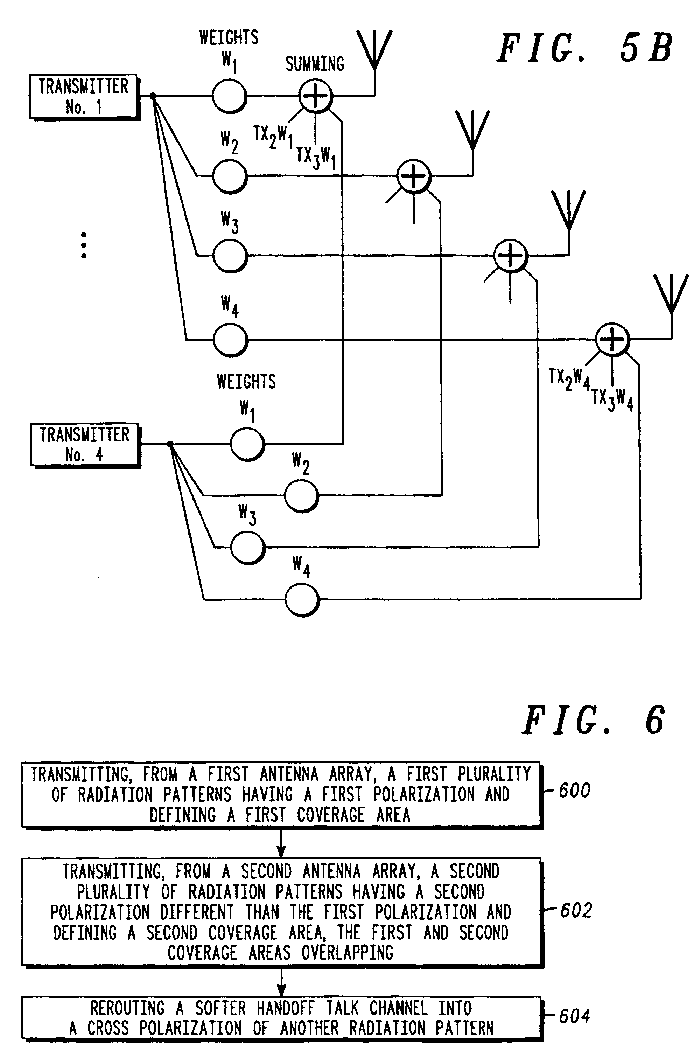

As seen in **FIGS. 4A-4C,** the first antenna array **404** is adapted to transmit a first plurality of radiation patterns **415** (A+, B+, C+, D+) defining a first coverage area. Preferably, first antenna array **404** comprises a passive beam forming network **416** and antenna elements **420-423** of the dual polarization uniform linear array **418.** In the preferred embodiment, antenna elements **420-423** comprise patch elements or dipoles. Although first antenna array **404** is described as corriprising a narrow beam antenna array including a passive beam forming network and a uniform linear array, it will be appreciated by those skilled in the art that other configurations may readily be utilized without departing from the scope of the present invention. For example; as illustrated in **FIG. 5A,** a plurality of discrete directive antennas, such as sector antennas or dish antennas, may be used instead of the passive beam forming network/uniform linear array combination illustrated in **FIGS. 4A-4C.** Similarly, the passive beam forming network **416** illustrated in **FIGS. 4A-4C** may be instead active electronic gain and phase weighting and summing to a linear or circular array as illustrated in **FIG. 5B.**

Referring back to **FIGS. 4A-4C,** a second antenna array **406** is adapted to transmit a second plurality of radiation patterns **417** (A-, B-, C-, D-) defining a second coverage area. As discussed above with regard to the first antenna array, in the preferred embodiment, second antenna array 406 comprises passive beam forming network **419** and antenna elements **424-427** of the dual polarization uniform linear array **418.** In the preferred embodiment, the first and second coverage areas overlap. Additionally, in the preferred embodiment, passive beam forming network **419** includes a Butler matrix, and uniform linear array **418** includes a plurality of antenna elements **424-427,** which in the preferred embodiment comprise patch elements or dipoles. Although second antenna array **406** is described as comprising a narrow beam antenna array including a passive beam forming network and a uniform linear array, it will be appreciated by those skilled in the art that other configurations may readily be utilized without departing from the scope of the present invention. For example, as illustrated in **FIG. 5A,** a plurality of discrete directive antennas, such as sector antennas or dish antennas, may be used instead of the passive beam forming network/uniform linear array combination illustrated in **FIGS. 4A-4C.** Similarly, the passive beam forming network **419** illustrated in **FIGS. 4A-4C** may be instead an active electronic gain and phase weighting and summing to a linear or circular array as illustrated in **FIG. 5B.**

In the preferred embodiment, each of the first and second antenna arrays comprises a narrow beam antenna and each of the first and second plurality of radiation patterns include a first plurality of adjacent beams and a second plurality of adjacent beams, respectively. However, it will be appreciated by those skilled in the art that other antenna array configurations, and other radiation patterns, may be utilized without departing from the scope of the present invention. In addition, as will be appreciated by those skilled in the art, when two or more carriers are deployed, alternate frequencies may be placed on alternate polarizations, and a third carrier may be separated by two channel spacings, thereby allowing more efficient frequency combining. In so doing, the present invention still provides two antenna arrays covering the same region, thereby allowing frequencies f1, f3, f5, etc. to be placed on one polarization (i.e. -45 degrees) and frequencies f2, f4, f6, etc. to be placed on another polarization (i.e. +45 degrees).

With reference now to **FIG. 6,** there is depicted a logical flowchart of the process of providing forward link softer handoff in a CDMA communication system with dual polarized antennas according to the method and system of the present invention. As shown, the process begins at block **600**, wherein the step of transmitting, from a first antenna array, a first plurality of radiation patterns having a first plurality and defining a first coverage area is performed. Thereafter, as shown at block **602,** the step of transmitting, from a second antenna array, a second plurality of radiation patterns having a second polarization different from the first polarization and defining a second coverage area, the first and second coverage areas overlapping, is performed. Thereafter, as shown at block **604**, the step of rerouting a softer handoff talk channel into a cross polarization of another radiation pattern is performed.

The foregoing description of a preferred embodiment of the invention has been presented for the purpose of illustration and description. It is not intended to be exhaustive or to limit the invention to the precise form disclosed. Obvious modifications or variations are possible in light of the above teachings. The embodiment was chosen and described to provide the best illustration of the principles of the invention and its practical application, and to enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly, legally, and equitably entitled.

## Claims

1. An apparatus for providing polarization diversity in a code division multiple access cellular communication system, wherein a mobile station is in softer handoff, the apparatus comprising:
a first antenna array (404) adapted to transmit a first plurality of radiation patterns (415) having a first polarization and defining a first coverage area;
a second antenna array (406) adapted to transmit a second plurality of radiation patterns (417) having a second polarization different than the first polarization and defining a second coverage area, the first and second coverage areas substantially overlapping; and wherein the mobile station is in softer handoff with a plurality of radiation patterns (415, 417) of said first antenna array (404),a softer handoff (430) router coupled to the first antenna array (404) and the second antenna array (406), the softer handoff router adapted to reroute a talk channel (402) from one of the said plurality of radiation patterns of the first antenna array (404) the mobile station is in softer handoff with, into a radiation pattern of the second antenna array (406).

2. An apparatus as recited in claim 1, wherein at least one of the first antenna array and the second antenna array comprises a plurality of antenna elements and a beam former adapted to produce a plurality of adjacent beams.

3. An apparatus as recited in claim 2, wherein the softer handoff router is adapted to reroute the softer handoff talk channel into a second polarization of an adjacent beam.

4. An apparatus as recited in claim 2, wherein the beam former comprises a Butler matrix.

5. An apparatus as recited in claim 2, wherein the plurality of antenna elements comprise a uniform linear array.

6. An apparatus as recited in claim 5, wherein the uniform linear array comprises one of a plurality of dipoles and a plurality of patch elements.

7. An apparatus as recited in claim 1, wherein at least one of the first antenna array and the second antenna array comprises a plurality of directive antennas.

8. A method for providing polarization diversity in a code division multiple access cellular communication system, wherein a mobile station is in softer handoff, the method comprising the steps of:
transmitting (600), from a first antenna array (404), a first plurality of radiation patterns (415) having a first polarization and defining a first coverage area;
transmitting (602), from a second antenna array (406), a second plurality of radiation patterns (417) having a second polarization different from the first polarization and defining a second coverage area, the first and second coverage areas substantially overlapping; and wherein the mobile station is in softer handoff with a plurality of radiation patterns (415, 417) of said first antenna array (404),
rerouting (604) a talk channel (402) from one of the said plurality of radiation patterns of the first antenna array (404) the mobile station is in softer handoff with into a radiation pattern of the second antenna array.

9. A method as recited in claim 8, wherein the step of rerouting includes rerouting the softer handoff talk channel from a radiation pattern of the first antenna array into a radiation pattern of the second antenna array.

10. A method as recited in claim 9, wherein the step of transmitting a first plurality of radiation patterns includes transmitting a first plurality of adjacent beams and the step of transmitting a second plurality of radiation patterns includes transmitting a second plurality of adjacent beams.

11. A method as recited in claim 10, wherein the step of rerouting includes rerouting the softer handoff talk channel into a second polarization of an adjacent beam.

12. A method as recited in claim 8, including the step of placing alternate frequencies on alternate arrays when two or more carriers are deployed.

13. A method as recited in claim 12, including the step of separating a third carrier by two channel spacings when a third carrier is deployed.

## Patentansprüche

1. Vorrichtung zum Bereitstellen von Polarisations-Diversität in einem Zellularen CDMA-Kommunikationssystem (CDMA = Code Division Multiple Access/Mehrfachzugriff im Codemultiplex), wobei sich eine Mobilstation in einer weicheren Übergabe befindet, wobei die Vorrichtung umfasst:
eine erste Antennenanordnung (404), die dazu ausgelegt ist, eine erste Mehrzahl von Strahlungsmustern (415) mit einer ersten Polarisation zu übertragen, und die ein erstes Abdeckungsgebiet definiert;
eine zweite Antennenanordnung (406), die dazu ausgelegt ist, eine zweite Mehrzahl von Strahlungsmustern (417) mit einer zur ersten Polarisation unterschiedlichen zweiten Polarisation zu übertragen, und die ein zweites Abdeckungsgebiet definiert, wobei sich das erste und das zweite Abdeckungsgebiet im Wesentlichen überschneiden; und wobei sich die Mobilstation in einer weicheren Übergabe mit einer Mehrzahl von Strahlungsmustern (415, 417) der ersten Antennenanordnung (404) befindet, wobei ein Router für eine weichere Übergabe (430) an die erste Antennenanordnung (404) und an die zweite Antennenanordnung (406) gekoppelt ist, wobei der Router für die weichere Übergabe dazu ausgelegt ist, einen Sprachkanal (402) von einem der Mehrzahl von Strahlungsmustern der ersten Antennenanordnung (404), mit dem sich die Mobilstation in einer weicheren Übergabe befindet, in ein Strahlungsmuster der zweiten Antennenanordnung (406) umzuleiten.

2. Vorrichtung nach Anspruch 1, wobei mindestens eine der ersten Antennenanordnung und der zweiten Antennenanordnung eine Mehrzahl von Antennenelementen und einen Strahlformer umfasst, dazu ausgelegt, eine Mehrzahl von benachbarten Strahlen zu produzieren.

3. Vorrichtung nach Anspruch 2, wobei der Router für die weichere Übergabe dazu ausgelegt ist, den Sprachkanal für die weichere Übergabe in eine zweite Polarisation eines benachbarten Strahls umzuleiten.

4. Vorrichtung nach Anspruch 2, wobei der Strahlformer eine Butler-Matrix umfasst.

5. Vorrichtung nach Anspruch 2, wobei die Mehrzahl von Antennenelementen eine gleichmäßige lineare Anordnung umfasst.

6. Vorrichtung nach Anspruch 5, wobei die gleichmäßige lineare Anordnung entweder eine Mehrzahl von Dipolen oder eine Mehrzahl von Patch-Elementen umfasst.

7. Vorrichtung nach Anspruch 1, wobei mindestens eine der ersten Antennenanordnung und der zweiten Antennenanordnung eine Mehrzahl von Richtantennen umfasst.

8. Verfahren zum Bereitstellen von Polarisation-Diversität in einem Zellularen CDMA-Kommunikationssystem (CDMA = Code Division Multiple Access/Mehrfachzugriff im Codemultiplex), wobei sich eine Mobilstation in einer weicheren Übergabe befindet, wobei das Verfahren die Schritte umfasst:
Übertragen (600), von einer ersten Antennenanordnung (404) aus, einer ersten Mehrzahl von Strahlungsmustern (415), die eine erste Polarisation aufweisen und ein erstes Abdeckungsgebiet definieren;
Übertragen (602), von einer zweiten Antennenanordnung (406) aus, einer zweiten Mehrzahl von Strahlungsmustern (417), die eine von der ersten Polarisation unterschiedliche zweite Polarisation aufweisen und ein zweites Abdeckungsgebiet definieren, wobei sich das erste und das zweite Abdeckungsgebiet im Wesentlichen überschneiden; und wobei sich die Mobilstation in einer weicheren Übergabe mit einer Mehrzahl von Strahlungsmustern (415, 417) der ersten Antennenanordnung (404) befindet,
Umleiten (604) eines Sprachkanals (402) von einem der Mehrzahl von Strahlungsmustern der ersten Antennenanordnung (404), mit dem sich die Mobilstation in einer weicheren Übergabe befindet, in ein Strahlungsmuster der zweiten Antennenanordnung.

9. Verfahren nach Anspruch 8, wobei der Schritt des Umleitens das Umleiten des Sprachkanals mit der weichen Übergabe von einem Strahlungsmuster der ersten Antennenanordnung in ein Strahlungsmuster der zweiten Antennenanordnung umfasst.

10. Verfahren nach Anspruch 9, wobei der Schritt des Übertragens einer ersten Mehrzahl von Strahlungsmustern das Übertragen einer ersten Mehrzahl von benachbarten Stahlen umfasst und der Schritt des Übertragens einer zweiten Mehrzahl von Strahlungsmustern das Übertragen einer zweiten Mehrzahl von benachbarten Strahlen umfasst.

11. Verfahren nach Anspruch 10, wobei der Schritt des Umleitens das Umleiten des Sprachkanals mit der weicheren Übergabe in eine zweite Polarisation eines benachbarten Strahles umfasst.

12. Verfahren nach Anspruch 8, das den Schritt des Platzierens wechselnder Frequenzen auf wechselnden Anordnungen umfasst, wenn zwei oder mehrere Träger zum Einsatz kommen.

13. Verfahren nach Anspruch 12, das den Schritt des Separierens eines dritten Trägers durch zwei Kanalabstände umfasst, wenn ein dritter Träger zum Einsatz kommt.

## Revendications

1. Dispositif pour fournir une diversité de polarisation dans un système de communication cellulaire à accès multiples par code de répartition, dans lequel un poste mobile se situe dans une opération plus souple de changement de cellule, le dispositif comprenant :
un premier réseau d'antennes (404) adapté pour transmettre une première pluralité de diagrammes de rayonnement (415) possédant une première polarisation et définissant une première zone de couverture; un second réseau d'antennes (406) adapté pour transmettre une seconde pluralité de diagrammes de rayonnement (417) possédant une seconde polarisation différente de la première polarisation et définissant une seconde zone de couverture, les première et seconde zones de couverture se chevauchant sensiblement; et dans lequel le poste mobile se situe dans une opération plus souple de changement de cellule avec une pluralité de diagrammes de rayonnement (415,417) dudit premier réseau d'antennes (404), un routeur de changement de cellule plus souple (430) couplé au premier réseau d'antennes (404) et au second réseau d'antennes (406), le routeur de changement de cellules plus souple étant adapté pour réacheminer un canal vocal (402) de l'un de ladite pluralité de diagrammes de rayonnement du premier réseau d'antennes (404), avec lequel le poste mobile se situe dans une opération de changement plus souple de cellule, dans un diagramme de rayonnement du second réseau d'antennes (406).

2. Dispositif selon la revendication 1, dans lequel au moins l'un du premier réseau d'antennes et du second réseau d'antennes comporte une pluralité d'éléments d'antenne et un dispositif de mise en forme de faisceaux adapté pour produire une pluralité de faisceaux adjacents.

3. Dispositif selon la revendication 2, dans lequel le routeur de changement plus souple de cellule est adapté pour réacheminer le canal vocal de changement plus souple de cellule dans une seconde polarisation d'un faisceau adjacent.

4. Dispositif selon la revendication 2, dans lequel le dispositif de mise en forme de faisceaux comprend une matrice de Butler.

5. Dispositif selon la revendication 2, dans lequel la pluralité d'éléments d'en-tête comprennent un réseau linéaire uniforme.

6. Dispositif selon la revendication 5, dans lequel le réseau linéaire uniforme comprend l'un d'une pluralité de dipôles et d'une pluralité d'éléments en forme de secteurs.

7. Dispositif selon la revendication 1, dans lequel au moins l'un du premier réseau d'antennes et du second réseau d'antennes comprend une pluralité d'antennes directives.

8. Procédé pour fournir une diversité de polarisation dans un système de communication cellulaire à accès multiples par code de répartition, dans lequel un poste mobile se situe dans une opération plus souple de changement de cellule, le procédé comprenant les étapes consistant à :
transmettre (600), à partir d'un premier réseau d'antennes (404) adapté pour transmettre une première pluralité de diagrammes de rayonnement (415) possédant une première polarisation et définissant une première zone de couverture;
transmettre (602), à partir d'un second réseau d'antennes (406), une seconde pluralité de diagrammes de rayonnement (417) possédant une seconde polarisation différente de la première polarisation et définissant une seconde zone de couverture, les première et seconde zones de couverture se chevauchant sensiblement; et dans lequel le poste mobile se situe dans une opération plus souple de changement de cellule avec une pluralité de diagrammes de rayonnement (415,417) dudit premier réseau d'antennes (404),
réacheminer (604) un canal vocal (402) de l'un de ladite pluralité de diagrammes de rayonnement du premier réseau d'antennes (404), avec lequel le poste mobile se situe dans une opération plus souple de changement de cellule, dans un diagramme de rayonnement du second réseau d'antennes (406).

9. Procédé selon la revendication 8, selon lequel l'étape de réacheminement inclut le réacheminement du canal vocal de changement plus souple de cellule depuis un diagramme de rayonnement du premier réseau d'antennes à un diagramme de rayonnement du second réseau d'antennes.

10. Procédé selon la revendication 9, dans lequel l'étape de transmission d'une première pluralité de diagrammes de rayonnement inclut la transmission d'une première pluralité de faisceaux adjacents, et l'étape de transmission d'une seconde pluralité de diagrammes de rayonnement inclut la transmission d'une seconde pluralité de faisceaux adjacents.

11. Procédé selon la revendication 10, selon lequel l'étape de réacheminement inclut le réacheminement du canal vocal de changement plus souple de cellule, dans une seconde polarisation d'un faisceau adjacent.

12. Procédé selon la revendication 8, comprenant l'étape consistant à positionner des fréquences alternées sur des réseaux alternés lorsque deux ou plus de deux porteuses sont déployées.

13. Procédé selon la revendication 12, incluant l'étape de séparation d'une troisième porteuse par deux espacements de canaux lorsqu'une troisième porteuse est déployée.
